# EUROPEAN PATENT APPLICATION

(11) **EP 4 148 633 A1**
(43) Date of publication of application: **15.03.2023**
(21) Application number: 21195751.9
(22) Date of filing: 09.09.2021
(51) Int. Cl.: G06Q 10/00, G07C 5/00

(54) **A METHOD FOR MANAGING COMPONENT MAINTENANCE FOR VEHICLES**

(71) Applicant: VOLVO TRUCK CORPORATION, 405 08 Göteborg (SE)
(72) Inventor: Dushyanth S, S, Tiruchirapalli Tamil Nadu 620001 (IN); Nair, Dhanesh, Haripad, Kerala, 690512 (IN)
(74) Representative: Germain Maureau

(57) **Abstract**

A method for managing component maintenance of a vehicle (3), such as a truck, the method comprising following steps: obtaining a list of vehicle components (C1, C2) that are not replaced systematically at regular time or mileage interval; collecting data from a remote server (9); calculating, for each component (C1, C2), an expected lifetime period and/or mileage (A1, A2) based on collected data; calculating, for each component (C1, C2), an effective lifetime period and/or mileage; determining, for each component (C1, C2), a due date and/or mileage (T1, T2) for maintenance of each component (C1, C2); informing the vehicle (3) of coming due dates and/or mileages (T1, T2) for maintenance for its components; controlling concerned component(s) (C1, C2), when the roadworthiness criteria are met, a new expected lifetime period and/or mileage (A1, A2) being determined for each refitted component(s) (C1, C2) by applying a corrective factor.

## Description

### TECHNICAL FIELD

The invention relates to a method for managing component maintenance of vehicles, such as trucks, boats, buses, passenger cars and construction equipment. In particular, it concerns the surveillance of component usage and the warning of the person in charge for controlling a component that might fail.

### BACKGROUND

The invention relates to the field of corrective maintenance on vehicles, such as trucks.

Corrective maintenance is a branch of maintenance operations that consists in correcting a fault as soon as it happens. For instance, brake pads, injectors, tires, brake discs, clutch, gearbox, battery and so on are not components that are replaced at regular intervals of time or mileage: This means that, for these particular components, there is no maintenance plan set up depending on vehicle mileage or lifetime The lifetime of these components depends on many parameters, including driving conditions, manufacturing tolerances, etc.

Today, and since there is no prevention that is made, such components are replaced only after failure, which means that failure can occur on the road. Truck assistance on the road is very expensive, which is why there is a need to set up a preventive maintenance for these particular components.

It is known to use vehicles for industrial and transport purposes, for example for goods or passenger transport. Each vehicle comprises components to be replaced when broken or used. It is therefore key to avoid a severe failure of a component that might forbid the use of a vehicle.

Some components such as filters should be replaced regularly and other components do not have any regular replacement intervals. These components without any regular replacement intervals are generally replaced in event of a failure of malfunction.

This failure or malfunction can only be identified through a truck behavior or a malfunction warning on the instrument cluster of the vehicle. The vehicle may have to be unloaded and then sent to the workshop or repaired on the road in event of a failure.

The customer can incur huge loss, since he or she must arrange alternate transport or delay in shipment delivery depending on the severity of failure. In case of perishable goods, the whole consignment can be wasted as timely delivery is very important.

The present invention aims to solve all or some of the disadvantages mentioned above.

Although the invention will be described with respect to a truck, the invention is not restricted to this particular vehicle, but may also be used in other vehicles, such as, buses, passenger cars, boats and construction equipment.

### SUMMARY

An object of the invention is to provide a method for managing component maintenance for vehicles wherein there is a warning for checking components in a workshop based on an expected lifetime.

The object is achieved by a method according to claim 1.

The method enables to track the effective lifetime period and/or mileage of a component. When the remaining useful life of the component is less than a threshold value, expected lifetime and/or mileage of a component is attained, the concerned vehicle can go to the workshop.

Depending on the component roadworthiness, the component is replaced and a new due date or mileage is set or the used component is refitted also with a new due date.

Thus, it enables to act preventively and avoid malfunctions or breakages that could lead to the interruption of the usage of a vehicle. The organization of the transport is therefore easier as there are less occurrences of the vehicles reorganization due to the unavailability of one or several vehicles.

The terms "date and/or mileage" and "period and/or mileage" are used to specify that the lifetime can be shown as a time feature and/or as a mileage feature. Depending on the type of component, it could be advantageous to consider one of these features or both.

According an aspect of the invention, the expected lifetime period and/or mileage of a component corresponds to an average value, a median value or another calculated value based on the date and/or mileage at which said component on other vehicles has failed in the past.

According to an aspect of the invention, the remote server to which it is referred to at step E2 records all components failures that have occurred on other vehicles before the expiration of corresponding warranty periods and/or mileages.

According to an aspect of the invention, the step of determining, for each component, an expected lifetime period and/or mileage, is preceded by a step of obtaining, for each component of a manufacturer warranty period and/or mileage, said expected lifetime period and/or mileage taking into account the manufacturer warranty period and/or mileage.

This provision enables to determine the expected lifetime on a known basis, i.e. data from the manufacturer concerning the warranty.

According to an aspect of the invention, the manufacturer warranty periods and/or mileages from the components originate from a warranty data portal. Preferably, the warranty data portal is maintained by the vehicle manufacturer or dealer. It stores information regarding the warranty periods and/or mileages of each of the plurality of components in a vehicle.

According to an aspect of the invention, the list of components obtained at step E1 includes at least one of the following: injectors; clutch; steering pump; fuel pump; EBS Modulator.

According to an aspect of the invention, the step of calculating, for each component, an expected lifetime period and/or mileage also takes into account an effective replacement period and/or mileage. The step of controlling concerned component(s) can included an entry of a component maintenance confirmation together with the effective replacement period and/or mileage.

In other words, the frequency of replacement of a component based on the corresponding roadworthiness criteria is also taken into account for determining the expected lifetime period.

The expected lifetime period is therefore obtained from both theoretical data from the manufacturer and effective or real data from the field.

According to an aspect of the invention, the step of calculating, for a component, an expected lifetime period and/or mileage is preceded by a step of obtaining, for said component a failure and/or malfunction notice from a vehicle.

The method enables to aggregate different data to calculate the expected lifetime. In particular, each vehicle comprises a command system configured to wirelessly exchange information. Thus, when there is an unexpected component malfunction or failure, the calculated expected lifetime can be adapted.

According to an aspect of the invention, the step of informing each vehicle of coming due dates and/or mileages for maintenance for its components corresponds to providing notifications according to a wireless communication protocol.

Each driver is informed while driving without doing any specific actions. Preferably, the driver is notified through the instrument cluster of the vehicle. In addition, such notifications could also be sent to other devices that have been configured for.

According an aspect of the invention, it consists in displaying notifications on vehicle dashboard and, possibly, to back office of vehicle manufacturer, according to the wireless communication protocol.

According to an aspect of the invention, for each component, several notifications are sent according to fixed intervals and/or defined percentages of the corresponding expected lifetime period and/or mileage achievement.

According to an aspect of the invention, a pre-warning notification is sent when the remaining expected life of the component is less than 20% and a final warning notification is sent when the remaining expected lifetime of the component is less than 5%.

When the remaining expected life of the component is 20% the driver will get warning on the instrument cluster and a dedicated connected device. Driver will be able to cancel the warning and drive. Only when the truck is switched off and restarted the pre-warning will pop up again.

When the remaining useful life of the component is less than 5% the driver will receive a final warning notification on the instrument cluster and on any connected device. The driver will be able to cancel the warning but at fixed interval reminder will pop up for workshop visit.

According to an aspect of the invention, corrective factor to which it is referred to above is comprised between 100% and 200%, preferably between 100% and 150%. Preferably, the steps of the method are computed at a regular time interval, for instance every day or whenever ignition key is switched on

According to an aspect of the invention, during the entry of a component maintenance confirmation, the new expected lifetime period and/or mileage determined for a refitted component is less than the new expected lifetime period and/or mileage determined for a new component.

According to an aspect of the invention, the new expected lifetime period and/or mileage determined for a refitted component is 50% or less than the new expected lifetime period and/or mileage determined for a new component.

This provision enables to reduce the risk of failure of a refitted component.

The present invention also concerns a computer program product comprising code instructions arranged to implement the steps of a method disclosed above when said program is executed on a remote server for managing vehicles component maintenance, e.g. maintenance in a fleet of vehicles.

The invention also concerns a remote server for managing component maintenance for vehicles comprising in memory the code instructions of a computer program product as described above and arranged to execute such computer program product.

According to an aspect of the invention, the remote server for managing component maintenance for vehicles includes a communication module for sending and receiving data and/or instructions from external entities.

The communication module is a telematics gateway for exchanging information with the warranty data portal, each vehicle and any compatible device.

The different aspects defined above that are not incompatible can be combined.

### BRIEF DESCRIPTION OF THE DRAWINGS

With reference to the appended drawings, below follows a more detailed description of embodiments of the invention cited as examples.

In the drawings:
- Fig. 1: is a schematic view of a vehicle communicating with a remote server, and
- Fig. 2: is a scheme of the method steps.

### DETAILED DESCRIPTION OF EXAMPLE EMBODIMENTS OF THE INVENTION

In the following detailed description of the figures defined above, the same elements or the elements that are fulfilling identical functions may retain the same references so as to simplify the understanding of the invention.

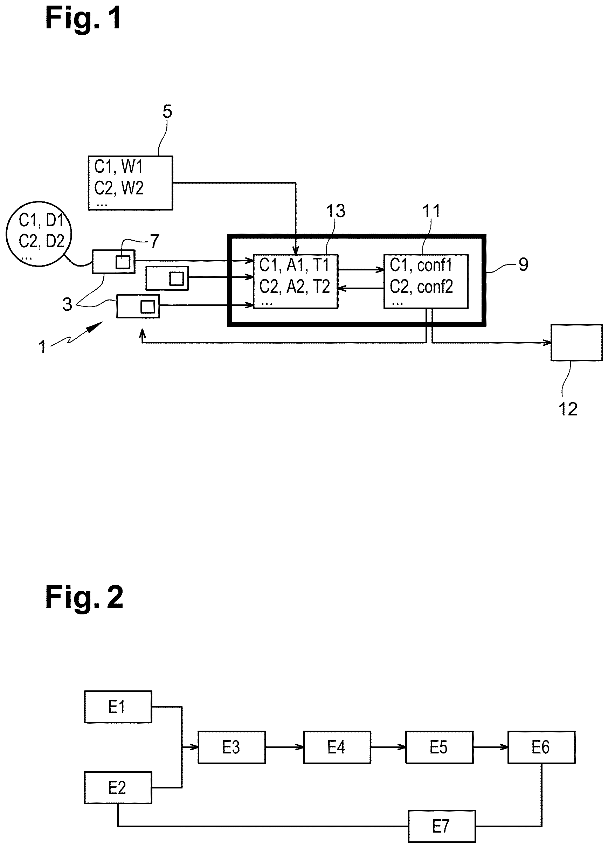

As illustrated in figures 1 and 2, a method for managing component maintenance of vehicles 3 comprises the steps described below.

A step E1 consists in obtaining a list of vehicle components C1, C2 that are not replaced systematically at regular time or mileage interval, each component 1 being affected with first usage date and/or mileage D1, D2. The list of components obtained at step E1 includes at least one of the following: injectors; clutch; steering pump; fuel pump; EBS Modulator. The terms "date and/or mileage" and "period and/or mileage" are used to specify that the lifetime can be shown as a time feature and/or as a mileage feature. Depending on the type of component C1, C2, it could be advantageous to consider one of these features or both.

A step E2 consists in collecting data from a remote server 9 on which are recorded, for each component, the date and/or mileage at which said component on other vehicles has failed in the past.

The remote server 9 to which it is referred to at step E2 records all components failures that have occurred on other vehicles before the expiration of corresponding warranty periods and/or mileages W1, W2.

A step E3 consists in calculating, for each component C1, C2, an expected lifetime period and/or mileage A1, A2 based on collected data

The expected lifetime period and/or mileage A1, A2 of a component C1, C2 corresponds to an average value, a median value or another calculated value based on the date and/or mileage at which said component on other vehicles has failed in the past.

To determine the expected lifetime periods and/or mileages A1, A2, the following two steps are realized previously and continuously to refine the values of the expected lifetime period and/or mileage A1, A2.

First, it consists in obtaining, for each component C1, C2 of a manufacturer warranty period and/or mileageW1, W2. Said expected lifetime period and/or mileage A1, A2 takes into account the manufacturer warranty period and/or mileage A1, A2.

It enables to determine the expected lifetime on a known basis, i.e. data from the manufacturer.

The manufacturer warranty periods and/or mileages W1, W2 from the components C1, C2 originate from a warranty data portal 5. The warranty data portal 5 is maintained by the vehicle manufacturer or dealer to provide updates. It stores information regarding the warranty periods and/or mileages W1, W2 of each of the plurality of components C1, C2 in a vehicle 3.

Second, it consists in obtaining, for a component, a failure and/or malfunction notice from a vehicle 3.

Then, there is a step E4 which consists in calculating, for each component C1, C2, an effective lifetime period and/or mileage using the first usage date and/or mileage D1, D2.

A step E5 consists in determining, for each component C1, C2, a due date and/or mileage T1, T2 for maintenance of each componentC1, C2 based on the comparison of the effective lifetime period and/or mileage to the expected lifetime period and/or mileage A1, A2.

A step E6 consists in informing each vehicle 3 of coming due dates and/or mileages T1, T2 for maintenance for its components C1, C2.

This step corresponds to providing notifications according to a wireless communication protocol.

Each driver is informed while driving without doing any specific actions. The driver is notified through the instrument cluster of the vehicle 3. In addition, such notifications could also be sent to other devices that have been configured for.

For each component C1, C2, several notifications are sent according to fixed intervals and/or defined percentages of the corresponding expected lifetime period and/or mileage achievement.

A pre-warning notification is sent when the remaining expected life of the component C1, C2 is less than 20% and a final warning notification is sent when the remaining expected life of the component is less than 5%.

When the remaining expected life of the component C1, C2 is 20% the driver will get warning on the instrument cluster and a dedicated connected device. Driver will be able to cancel the warning and drive. Only when the truck is switched off and restarted the pre-warning will pop up again.

When the remaining useful life of the component C1, C2 is less than 5% the driver will receive a final warning notification on the instrument cluster and on any connected device. The driver will be able to cancel the warning but at fixed interval reminder will pop up for workshop visit.

The step E6 consists in displaying notifications on vehicle dashboard and, possibly, to back office 12 of vehicle manufacturer, according to a wireless communication protocol.

As explained, several notifications are sent according to fixed intervals and/or defined percentages of the corresponding expected lifetime period and/or mileage A1, A2 achievement.

The concerned vehicle can go to the workshop, there is then a step E7 that consists in controlling concerned component(s) C1, C2 according to roadworthiness criteria, and then replacing concerned component(s) C1, C2 when the roadworthiness criteria are not met or refitting concerned component(s) C1, C2 when the roadworthiness criteria are met,

A new expected lifetime period and/or mileage A1, A2 is determined for each refitted component(s) C1, C2 by applying a corrective factor, in particular superior to 100%and such as 130%, to the expected lifetime period and/or mileage calculated at step E3.

There is also an entry of a component maintenance confirmation conf1, conf2.

It has to be noted that the expected lifetime period and/or mileage A1, A2 also take into account an effective replacement period and/or mileage entered during the step E7 of entry of a component maintenance confirmation.

In other words, the frequency of replacement of a component C1, C2 based on the corresponding roadworthiness criteria is also taken into account for determining the expected lifetime period.

During the step E7, the new expected lifetime period and/or mileage A1, A2 determined for a refitted component C1, C2 is less than the new expected lifetime period and/or mileage A1, A2 determined for a new component C1, C2.

The new expected lifetime period and/or mileage A1, A2 determined for a refitted component is 50% or less than the new expected lifetime period and/or mileage determined for a new component. The goal is to reduce the risk of failure of a refitted component C1, C2.

A corrective factor to which it is referred to at step E7 is comprised between 100% and 200%, preferably between 100% and 150%.

The steps of the method are computed at a regular time interval, for instance every day or whenever ignition key is switched on.

The above-described steps are realized by a computer program product comprising code instructions arranged to implement said steps. They are executed on a processor of a remote server 9 for managing component maintenance of vehicles 3.

The remote server 9 for managing component maintenance comprises a communication module 11 for sending and receiving data and/or instructions from external entities. The remote server 9 also comprise a processing unit 13 including a memory.

The communication module 11 is a telematics gateway for exchanging information with the warranty data portal, each vehicle and any compatible device.

It is to be understood that the present invention is not limited to the embodiments described above and illustrated in the drawings; rather, the skilled person will recognize that many changes and modifications may be made within the scope of the appended claims.

## Claims

1. A method for managing component maintenance of a vehicle (3), such as a truck, the method comprising following steps:
- (E1) obtaining a list of vehicle components (C1, C2) that are not replaced systematically at regular time or mileage interval, each component (1) being affected with first usage date and/or mileage (D1, D2),
- (E2) collecting data from a remote server (9) on which are recorded, for each component, the date and/or mileage at which said component on other vehicles has failed in the past,
- (E3) calculating, for each component (C1, C2), an expected lifetime period and/or mileage (A1, A2) based on collected data,
- (E4) calculating, for each component (C1, C2), an effective lifetime period and/or mileage using the first usage date and/or mileage (D1, D2),
- (E5) determining, for each component (C1, C2), a due date and/or mileage (T1, T2) for maintenance of each component (C1, C2) based on the comparison of the effective lifetime period and/or mileage to the expected lifetime period and/or mileage (A1, A2),
- (E6) informing the vehicle (3) of coming due dates and/or mileages (T1, T2) for maintenance for its components,
- (E7) controlling concerned component(s) (C1, C2) according to roadworthiness criteria, and then replacing concerned component(s) (C1, C2) when the roadworthiness criteria are not met or refitting concerned component(s) (C1, C2) when the roadworthiness criteria are met, a new expected lifetime period and/or mileage (A1, A2) being determined for each refitted component(s) (C1, C2) by applying a corrective factor, in particular superior to 100%, for example 130%, to the expected lifetime period and/or mileage calculated at step E3.

2. The method of claim 1, wherein remote server to which it is referred to at step E2 records all components failures that have occurred on other vehicles before the expiration of corresponding warranty periods and/or mileages (W1, W2).

3. The method of claim 1 or 2, wherein the list of components obtained at step E1 includes at least one of the following: injectors; clutch; steering pump; fuel pump; EBS Modulator.

4. The method of any previous claim, wherein the step E6 consists in displaying notifications on vehicle dashboard and, possibly, to back office (12) of vehicle manufacturer, according to a wireless communication protocol.

5. The method according to claim 4, wherein, for each component (C1, C2), several notifications are sent according to fixed intervals and/or defined percentages of the corresponding expected lifetime period and/or mileage (A1, A2) achievement.

6. The method according to claim 5, wherein a pre-warning notification is sent when the remaining expected life of the component is less than 20% and a final warning notification is sent when the remaining expected lifetime of the component is less than 5%.

7. The method according to any one of the claims 1 to 6, wherein corrective factor to which it is referred to at step E7 is comprised between 100% and 200%, preferably between 100% and 150%.

8. The method according to any previous claim, wherein the steps of the method are computed at a regular time interval, for instance every day or whenever ignition key is switched on.

9. A computer program product comprising code instructions arranged to implement the steps of a method according to one of the claims 1 to 8 when said program is executed on a remote server (9) for managing vehicles component maintenance, e.g. maintenance in a fleet (1) of vehicles (3).

10. A remote server (9) for managing component maintenance of vehicles (3) comprising in memory the code instructions of a computer program product according to claim 9 and arranged to execute such computer program product.

11. The remote server (9) according to claim 10, including a communication module (11) for sending and receiving data and/or instructions from external entities.
